# EUROPEAN PATENT SPECIFICATION

(11) **EP 0 282 655 B1**
(45) Date of publication and mention of the grant of the patent: **09.02.1994**
(21) Application number: 87202270.2
(22) Date of filing: 07.05.1984
(51) Int. Cl.: G02B 6/36, G01K 11/00, G01F 23/28, C03C 25/04, G01D 5/26, G01N 21/43

(54) **Fiber optic structure**
Faseroptisches Bauelement
Elément à fibre optique

(30) Priority: 20.01.1984 US 572734
(43) Date of publication of application: 21.09.1988
(62) Divisional of application: 84902153.0
(73) Proprietor: Hughes Aircraft Company, Los Angeles, California 90045-0066 (US)
(72) Inventor: Pikulski, Joseph L., Newberry Park California 91320 (US)
(74) Representative: Colgan, Stephen James

(56) References cited:
- EP-A- 0 095 673
- EP-A- 0 124 415
- WO-A-82/01365
- WO-A-83/03670
- GB-A- 1 555 130
- JOURNAL OF APPLIED PHYSICS, vol. 54, no. 3, March 1983, pages 1198-1201, American Institute of Physics, New York, US; R.R.DILS: "High-temperature optical fiber thermometer"
- JOURNAL OF SCIENTIFIC INSTRUMENTS, vol. 31, 1954, pages 260-261, Institute of Physics, London, GB; J.E.GEAKE: "An optical dip-stick for liquid air"

## Description

### BACKGROUND OF THE INVENTION

Optical fiber has electro-deposited thereon a metal body which permits the fiber to be mechanically acted upon by machining, positioning, or handling the metal body.

Fiber optic waveguides are small and fragile. It is important that the waveguides be firmly supported at least at their ends so that they can be ground and polished with facets or other surfaces which are optimum for coupling light into the fiber or for coupling the fiber with respect to another optical structure such as another optical fiber, a detector, or an integrated optic waveguide. In the past, epoxy adhesive has been employed for attaching a fiber optic waveguide to a surface for the purpose of building a coupling device for the end of the fiber, including polishing of the fiber end. One of the problems of this attachment is that the dimensional changes in the hardening epoxy adhesive cause external forces on the fiber optic waveguide. These forces cause microbending in the optical fiber resulting in significant signal losses. Microbending, localized changes in the optical fiber's index of refraction, must be minimized in order to maximize the signal and the signal-to-noise ratio. Thus, there is need for a structure which can be built up onto an optical fiber to permit handling of the optical fiber and to permit machining and otherwise processing the end of the optical fiber to enhance coupling and the like.

### SUMMARY OF THE INVENTION

This invention is directed to a fiber optic structure in which the fiber has deposited upon its exterior a body of material which is sufficiently strong and rigid to permit machining and other handling of the fiber. The structure of this invention is defined in claim 1. The body of material should have a thermal coefficient of expansion substantially the same as that of the fiber optic material to minimize microbending and consequent microbending losses upon temperature change.

Other purposes and advantages of this invention will become apparent from a study of the following portion of the specification, the claims, and the attached drawings.

### BRIEF DESCRIPTION OF THE DRAWINGS

FIG. 1 is a perspective view of an optical fiber onto which a metallic body will be built up before being machined in accordance with this invention.

FIG. 2 is a perspective view of the same optical fiber of FIG. 1, showing a metal body built up thereon.

FIG. 3 is a side-elevational view, with parts broken away and parts taken in section showing an optical fiber with a metal body built up thereon and machined as a liquid level sensor, shown not sensing liquid.

FIG. 4 is a view similar to FIG. 5, showing the device sensing liquid.

FIG. 5 is a view of structure similar to FIG. 5, but showing a window in the end of the sensor.

FIG. 6 is a longitudinal section through a fiber optic structure formed as an extended range temperature sensor.

### DETAILED DESCRIPTION OF THE INVENTION

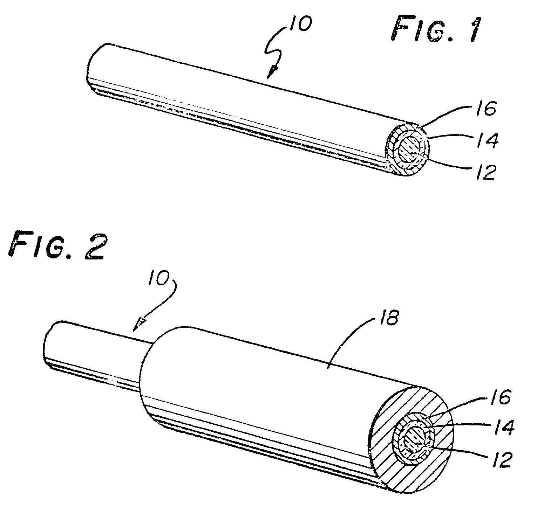

In FIG. 1, optical fiber 10 is the general indication of a typical coated optical fiber. Fiber core 12 is substantially transparent to the optical radiation of interest. It preferably carries an optical cladding 14 and a coating 16. Coating 16 can be either an organic material or an inorganic material such as aluminum. Such optical fibers can be made sufficiently flexible and optically transmissive to achieve the results required of optical fibers.

Referring to FIG. 2, copper body 18 is a built-up structure on coating 16 of fiber 10 when cladding is of an inorganic material such as aluminum. Alternatively, copper body 18 is a built-up structure on optical cladding 14 when coating 16 is of an organic material, coating 16 being removed therefrom prior to beginning of the build-up process.
When the optical cladding 14 is the exterior or material of the fiber, the length on which the body 18 is to be deposited can be made conductive by vapor deposition of silver or gold as a first step. Copper is particularly suited for the built-up structural body because it can be evenly and easily deposited upon the fiber. An even, localized-force-free deposition process eliminates localized forces which can cause microbending and consequent transmission losses. Other metals would be selected for the built-up structural body when found to be suitable for this even, localized-force-free deposition.

Copper body 18 is built up by electroplating. A suitable electroplating bath is prepared as follows: Two hundred twenty-five grams of copper sulphate are dissolved per liter of water. Fifty-five grams of sulfuric acid are also added per liter to provide the plating. A suitable electroplating bath is prepared. Two hundred twenty-five grams of copper sulphate are employed per liter of water. Fifty-five grams of sulfuric acid are also added per liter to provide the copper plating electrolyte. Added to the plating electrolyte solution is one-half milliliter of UBAC solution No. 1 per liter of electrolyte. This material is available from Udylite-Omic, 21441 Hoover Road, Warren, Michigan 48089. This mixture acts to improve the fineness of the copper grain in the electrolytic build up. In the alternative, blackstrap molasses is also useful for the purpose of improving the fineness of the copper grain.

It is critical to the plating that the plating current be a maximum of 180 milliamperes per square inch (279A/m²). A higher current accelerates the ions in the plating solution and this, in turn, produces random orientation which results in graininess. Currents lower than the maximum current improve the fineness of the copper grain. The preferred current is 90 milliamperes per square inch (140Am/²). The plating voltage is from 0 to 3 volts, and the electrolyte temperature is maintained at 70 to 80 degrees F (21.1 to 25.7°C). The concentration of UBAC solution No. 1 in the electrolyte is maintained during the plating operation.

The plating operation must be carefully performed to minimize stresses in the copper plate body which would cause microbending. Microbending, localized changes in the optical fiber's index of refracting, is caused by forces applied to fiber 10. Copper body 18 is thereby deposited without substantial effect upon fiber 10. The result is that the copper body 18 produces a transmission loss of less than 0.01 decibels in the fiber. Plating continues until the copper body 18 is built up to the desired size.

The built-up structural body is useful for creating structures of various utility and for use of the fiber 10 in various different applications.

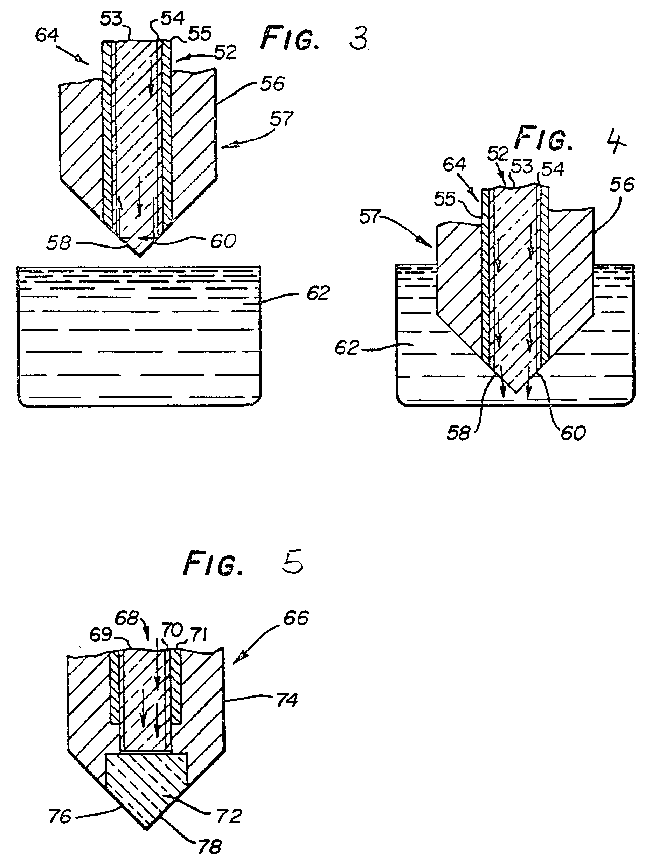

FIGS. 3 and 4 illustrate a liquid level system 64. Optical fiber 52 has a core 53, cladding 54, and coating 55. Body 56 is built up on optical fiber 52 at its sensing end 57. Body 56 is built up in the same way as was previously described for body 18. When there is an electrically conductive coating 55, such as aluminum, on optical cladding 54 this coating can then be used in the plating function for forming body 56 thereupon. If the coating is not electrically conductive or the coating is stripped from the cladding at the sensing end of the fiber, then a vapor deposited layer of silver or gold can be used on the cladding or bare fiber as the starting layer.

When body 56 is built up, its sensing end 57 is ground and polished into end faces which maximize internal reflection. Although as many end faces as desired can be used, two such end faces 58 and 60 are illustrated in FIGS. 3 and 4. The end faces form a right angle with respect to each other where the end faces meet on the tip of sensing end 57. The upper end (not shown) of the fiber has a light source and a light detector thereon and is called the detector end of the fiber. FIG. 3 illustrates sensor end 57 in a position wherein it is exposed to a gaseous environment. As faces 58 and 60 are open to a gaseous environment, the internal reflection returns a large signal, i.e., 60 percent, to the detector.

FIG. 4 illustrates sensor end 57 wherein end faces 58 and 60 are immersed in liquid 62. This immersion changes the reflection at the end faces. The major portion of the light does not reflect from the end faces, but passes out of fiber 52 and into liquid 62. Thus, when sensor end 57 is immersed in liquid, a much smaller signal is returned to the detector. The smaller return signal indicates that the liquid level is above the sensor end. In this way, the fiber acts as a liquid level sensing system.

In addition to holding the fiber so that the faces may be polished on the fiber, body 56 also serves to aid in retaining the sensing end of the fiber in position and protecting it against lateral forces. Thus, the liquid level sensing system 64 returns a substantial signal to the detector end when the sensor end 57 is not immersed in liquid 62. The angle between the end faces may be other than at right angles in order to maximize the difference in signal between the immersed and non-immersed positions of the sensor end.

As end faces are made on sensor end 57, coating 55 and optical cladding 54 are exposed. In some cases, coating 55 may react with the liquid in which the sensor end is immersed. In these cases, coating 55 may be terminated before the end of the fiber. Upon formation of the end faces, coating 55 would be protected from the liquid by the electroformed body.

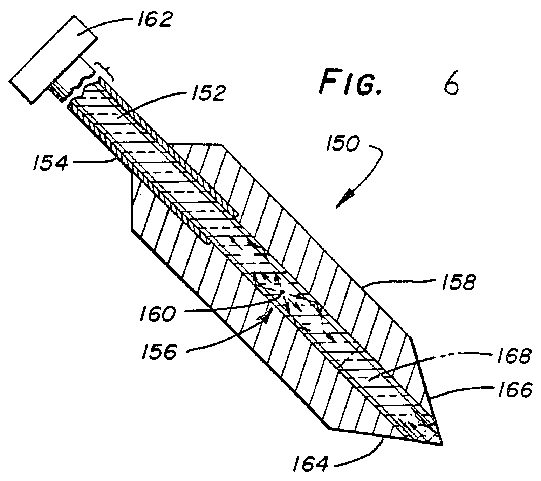

FIG. 5 illustrates liquid level sensing system 66 and shows only the sensing end of the system. Optical fiber 68 has its coating 71 terminated above the end of fiber 68. Coating 71 need not terminate above the end of fiber 68. In system 66, window 72 is butted to the end of fiber 68 and, thereupon, body 74 is plated around optical fiber 68 and window 72. This is to protect fiber 68 against a harsh external environment into which sensor is immersed. Deposition of body 74 is the same as was for the previously described deposition of body 18. When deposition is complete, faces 76 and 78 are ground and polished on window 72. The faces are formed at such angles as to maximize internal reflection when the faces are not immersed in liquid and to minimize reflection when they are immersed in liquid.

The detector end (not shown) of optical fiber 68 is opposite the sensor end and is provided with a light source and a detector. Thus, system 66 returns substantial reflection to the detector when the sensor end is not immersed and returns little reflection to the detector when the sensor end is immersed in liquid. System 66 provides window 72 to protect the fiber. The angles of the faces are ground and polished to best utilize the laws of total internal reflection. The window may be of any suitable material compatible with the liquid and wavelength of interest. Diamond and sapphire are suitable materials in some cases.

Temperature sensor 150 is illustrated in FIG. 6. Clad optical fiber 152 carries coating 154. The coating is stripped in the temperature-sensing region 156. Body 158 is built up in the temperature-sensing region and overlaps coating 154.

The materials used in the temperature sensor are based on the temperature to be sensed. Quartz begins to emit usefully detectable visable radiation at about 600 degrees C (while at lower temperatures other types of radiation is detectable) and softens at 1,660 degrees C. There is an increasing intensity of the emitted radiation from this lower limit to this upper limit. Thus, clad optical fiber 152 can be of quartz and body 158 can be of nickel or a high-temperature, platable alloy. Body 158 is built up in the same way as was previously described for body 18. Coating 154 is stripped far enough back so that it is not subject to degradation from temperature. When an incandescent point 160 emits light, some of the light passes toward detector 162 which receives the light passing upward in the fiber. The tip of sensor 150 is ground and polished to become a plurality of reflecting faces 164 and 166. Light passing down the fiber toward the lower end, where reflecting faces 164 and 166 are located, is reflected back toward detector 162. This reflection at the tip increases the useful signal by at least 40 percent.

Other temperature ranges are possible by employing an insert 168 at the tip which emits an optical signal over the desired temperature range. The built-up body 158 is of a suitable material for the selected temperature range and serves to protect the portion of the fiber in the high-temperature region. The total internal reflection which occurs at the tip of the sensor enhances its utility.

This invention has been described in its presently contemplated best mode, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A fiber optic structure comprising:
an optical fiber (53, 69, 152); and
a metallic body (56, 74, 158) on said optical fiber, said metallic body having an end face, said optical fiber being in communication with said face, characterised in that said face is disposed at an oblique angle to the optical axis of the fiber so as to enhance internal reflection of light in said fiber propagating toward said face, and the metallic body is strong and rigid enough to permit machining and other handling of the fiber and has a thermal coefficient of expansion substantially the same as that of the fibre optic material.

2. A fiber optic structure according to claim 1 wherein said structure is a liquid sensor with said optical fiber being arranged for connection to a source and a detector, the outer surface of said face being disposed at an oblique angle to the optical axis of the fiber so as to promote internal reflection from said face when said face is not submerged in liquid and to inhibit internal reflection when said face is immersed in liquid.

3. A fiber optic structure according to claim 1 wherein said structure is a temperature sensor, with said face reflecting light generated within said fiber as a function of temperature.

4. A fiber optic structure according to any of claims 1 to 3 wherein said metallic body has a pair of said faces which together form a dihedral end surface.

5. A fiber optic structure according to any of claims 1 to 4 wherein said body is electro-deposited copper.

6. A fiber optic structure according to any of claims 1 to 4 wherein said body is nickel or a high-temperature platable alloy.

## Patentansprüche

1. Eine optische Faserstruktur mit:
einer optischen Faser (53, 69, 152);
einem metallischen Körper (56, 74, 158) auf der optischen Faser, wobei der metallische Körper eine Endfläche aufweist, wobei die optische Faser mit der Fläche in Verbindung steht, dadurch gekennzeichnet, daß
die Fläche unter einem schiefen Winkel zu der optischen Achse der Faser angeordnet ist, um die interne Reflexion von Licht in der Faser zu verstärken, das sich in Richtung der Fläche ausbreitet, wobei der metallische Körper stark und steif genug ist, um eine Bearbeitung oder eine sonstige Handhabung der Faser zu erlauben und er einen termischen Expansionskoeffizienten aufweist, der im wesentlichen dem des Materials der optischen Faser entspricht.

2. Eine optische Faserstruktur nach Anspruch 1, worin die Struktur ein Liquidsensor ist, in dem die optische Faser für die Verbindung einer Quelle und eines Detektors angeordnet ist, wobei die äußere Oberfläche der Fläche unter einem schiefen Winkel zu der optischen Achse der Faser angeordnet ist, um interne Reflexionen von der Fläche zu unterstützen, wenn die Fläche nicht in einem Liquid untergetaucht ist, und um interne Reflexionen zu hemmen, wenn die Fläche in dem Liquid eingetaucht ist.

3. Eine optische Faserstruktur nach Anspruch 1, worin die Struktur ein Temperatursensor ist, wobei die Fläche Licht reflektiert, das innerhalb der Faser als eine Funktion der Temperatur erzeugt worden ist.

4. Eine optische Faserstruktur nach einem der Ansprüche 1 bis 3, worin der metallische Körper ein paar von Flächen aufweist, die zusammen eine zweiflächige Endoberfläche bilden.

5. Eine optische Faserstruktur nach einem der Ansprüche 1 bis 4, worin der Körper galvanisch aufgetragenes Kupfer ist.

6. Eine optische Faserstruktur nach einem der Ansprüche 1 bis 4, worin der Körper Nickel oder eine hochtemperatur-platierbare Legierung ist.

## Revendications

1. Structure à fibre optique comportant :
une fibre optique (53, 69, 152) ; et
un corps métallique (56, 74, 158) sur ladite fibre optique, ledit corps métallique ayant une face extrême, ladite fibre optique étant en communication avec ladite face, caractérisée en ce que ladite face est disposée sous un angle d'obliquité par rapport à l'axe optique de la fibre afin de renforcer la réflexion interne de la lumière se propageant dans ladite fibre vers ladite face, et le corps métallique est assez robuste et rigide pour permettre un usinage et d'autres manipulations de la fibre et possède un coefficient de dilatation thermique sensiblement égal à celui de la matière de la fibre optique.

2. Structure à fibre optique selon la revendication 1, dans laquelle ladite structure est un capteur de liquide, ladite fibre optique étant agencée pour une connexion à une source et un détecteur, la surface extérieure de ladite face étant disposée sous un angle d'obliquité par rapport à l'axe optique de la fibre afin de favoriser une réflexion interne depuis ladite face lorsque ladite face n'est pas plongée dans un liquide et à inhiber une réflexion interne lorsque ladite face est immergée dans un liquide.

3. Structure à fibre optique selon la revendication 1, dans laquelle ladite structure est un capteur de température, ladite face réfléchissant de la lumière générée à l'intérieur de ladite fibre en fonction de la température.

4. Structure à fibre optique selon l'une quelconque des revendications 1 à 3, dans laquelle ledit corps métallique présente une paire desdites faces qui forment ensemble une surface extrême dièdre.

5. Structure à fibre optique selon l'une quelconque des revendications 1 à 4, dans laquelle ledit corps est en cuivre électro-déposé.

6. Structure à fibre optique selon l'une quelconque des revendications 1 à 4, dans laquelle ledit corps est en nickel ou en un alliage pouvant être déposé sous haute température.
